**Europäisches Patentamt**

**European Patent Office**

**Office européen des brevets**

(19)

(11) Numéro de publication : **0 311 465 B1**

(12)

# FASCICULE DE BREVET EUROPEEN

(45) Date de publication du fascicule du brevet :
**13.05.92 Bulletin 92/20**

(51) Int. Cl.$^5$ : **B60G 17/02**

(21) Numéro de dépôt : **88401822.7**

(22) Date de dépôt : **12.07.88**

(54) **Dispositif d'assistance pour une commande de correcteurs d'assiette de véhicules automobiles.**

(30) Priorité : **31.07.87 FR 8710946**

(43) Date de publication de la demande :
**12.04.89 Bulletin 89/15**

(45) Mention de la délivrance du brevet :
**13.05.92 Bulletin 92/20**

(84) Etats contractants désignés :
**DE GB IT**

(56) Documents cités :
**EP-A- 0 066 043**
**EP-A- 0 256 897**
**FR-A- 440 088**
**FR-A- 1 094 986**
**FR-A- 2 284 472**
**GB-A- 1 478 099**
**GB-A- 2 158 205**
**US-A- 4 236 421**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **DEROCHE , Gabriel**
**3, rue Huraut**
**93250 - VILLEMOMBLE (FR)**

(74) Mandataire : **Lanceplaine, Jean-Claude et al**
**CABINET LAVOIX 2, Place d'Estienne d'Orves**
**F-75441 Paris Cédex 09 (FR)**

**Description**

La présente invention a pour objet un dispositif d'assitance pour une commande de correcteurs d'assiette de véhicules automobiles.

Certains véhicules automobiles et notamment les véhicules à suspension hydropneumatique sont équipés d'un dispositif de correction d'assiette automatique qui permet de conserver une assiette constante quelle que soit la charge. Ce dispositif est généralement constitué, pour chaque essieu, d'une barre flexible, reliée à une barre anti-devers, qui détecte la position moyenne des deux roues de l'essieu et qui commande un distributeur hydraulique. Lorsque la roue s'écarte d'une position de référence, l'effort dans la barre flexible et l'effort au distributeur augmentent jusqu'à ce que le distributeur modifie le volume de liquide dans les éléments porteurs pour rétablir la position de référence.

De plus, ces dispositifs sont généralement équipés d'une commande manuelle des correcteurs d'assiette qui permet, selon les besoins, de modifier la position de référence, donc la garde au sol du véhicule.

Cette commande de correcteurs d'assiette comporte généralement un levier de manoeuvre immobilisable en plusieurs positions déterminées et directement relié à une tringle ou à deux tringles sensiblement alignées et opposées réglant chacune la tension ou la compression d'un élément élastique qui agit sur un correcteur de hauteur.

La manoeuvre du levier est relativement dure, notamment pour le placer dans la position correspondant à la tension maximale de l'élément élastique, si bien qu'il est nécessaire de lui associer un asservissement.

A cet effet, on connaît dans le document EP-A-0 256 897, un dispositif d'assistance comportant un levier de manoeuvre immobilisable en plusieurs positions et relié à au moins une tringle qui tire ou pousse sur un élément élastique agissant sur un organe de correction d'assiette selon que ce levier, ainsi que la tringle, passe d'une position médiane à l'une ou l'autre des deux positions extrêmes. La liaison entre le levier et la tringle est assurée par l'intermédiaire d'un basculeur qui pivote sensiblement qu'un quart de tour quand ledit levier passe de sa position médiane à l'une ou l'autre des positions extrêmes et qui est relié à un vérin d'assitance mécanique exerçant sur ledit basculeur une force radiale et centripète en position médiane et tendant à le faire tourner dans le sens de l'éloignement de sa position médiane quand il en est écarté.

Mais, dans ce dispositif, le couple résultant sur le basculeur pour les différentes positions du levier de manoeuvre est en général assez important. Ce couple fait intervenir les moyens élastiques sollicités de manière croissante par le déplacement des tringles et le couple variable du vérin d'assistance mécanique. Ainsi, quand le dispositif quitte sa position crantée, il a tendance à échapper au contrôle de l'opérateur pour se mettre en butée.

L'invention a donc pour but un dispositif d'assistance pour une commande de correcteurs d'assiette de véhicules automobiles qui évite les inconvénients précités et qui comporte un levier de manoeuvre agissant sur un ou deux correcteurs de hauteur par l'intermédiaire de moyens élastiques reliés par des tringles à une manivelle qui admet une position médiane pour laquelle les moyens élastiques sont au repos, des moyens d'assistance mécanique agissant sur la manivelle quand elle quitte sa position médiane et des moyens d'entraînement de la manivelle par le levier de manoeuvre composé d'un premier secteur denté solidaire dudit levier engrénant avec un deuxième secteur denté solidaire de la manivelle.

Ce dispositif est caractérisé en ce qu'il comporte des moyens complémentaires d'assistance mécanique propres à annuler pour toutes les positions du ,levier de manoeuvre le couple résultant sur la manivelle et comportant un galet mis en appui par un organe-élastique sur une came solidaire du premier secteur denté.

Selon une autre caractéristique, le premier secteur comporte une denture interne et pivote sur un axe disposé à l'opposé du levier de manoeuvre par rapport à ladite denture interne.

Selon encore un autre caractéristique de l'invention, l'axe de rotation du premier secteur, l'axe de rotation commun du deuxième secteur et de la manivelle, et l'axe du levier de manoeuvre, sont situés dans un plan vertical de symétrie du dispositif quand les tringles sont en position médiane.

D'autres particularités et avantages de l'invention apparaitront au cours de la description qui va suivre, d'un exemple de réalisation du dispositif selon l'invention, en référence aux dessins annexés :

– la Fig. 1 est une vue schématique en position repos de l'ensemble d'un premier mode de réalisation du dispositif de commande correcteur d'assiette, à curseur à mouvement oscillant,

– la Fig. 2 est une vue à plus grande échelle du dispositif d'assistance mécanique selon la Fig. 1,

– la Fig. 3 est une vue en coupe selon la ligne 3-3 de la Fig. 2,

– la Fig. 4 est une vue de détail de la manivelle et des manetons,

– la Fig. 5 est une vue de détail en coupe sensiblement horizontale des manetons,

– la Fig. 6 est une vue schématique en position repos de l'ensemble d'un second mode de réalisation du dispositif de commande de correcteur d'assiette, à curseur à mouvement rectiligne,

– la Fig. 7 est une vue partielle à plus grande échelle du curseur à mouvement rectiligne selon la Fig. 6,

– la Fig. 8 est une vue en coupe selon la ligne 8-8 de la Fig. 7.

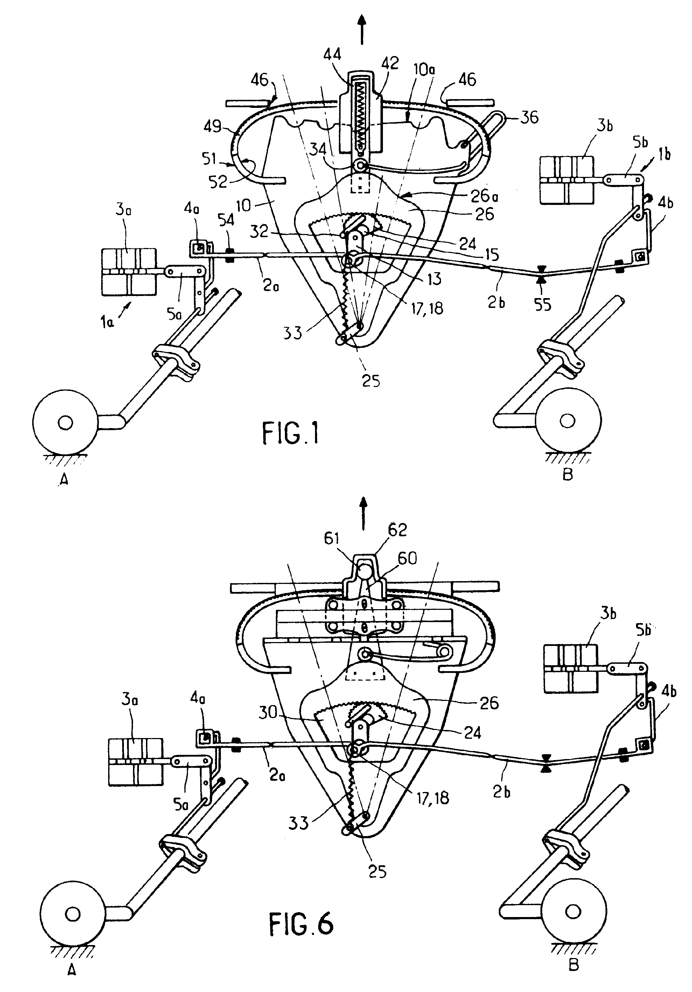

On voit sur la Fig. 1 que chaque essieu A et B d'un véhicule est muni d'un dispositif de correction d'assiette automatique respectivement 1a et 1b, permettant au véhicule de conserver une assiette constante quelle que soit la charge.

Pour chaque essieu, le dispositif 1a, 1b est commandé par une tringle longitudinale 2a, 2b qui agit d'une manière connue sur un correcteur de hauteur 3a, 3b par l'intermédiaire des ressorts de commande manuelle 4a, 4b en passant par une biellette de liaison 5a, 5b à double rotule.

Les dispositifs 1a et 1b de correction d'assiette avant et arrière sont pourvus d'un mécanisme de commande manuelle et d'assistance agissant sur les tringles longitudinales 2a, 2b pour bander les ressorts 4a, 4b et modifier l'assiette du véhicule afin d'obtenir, par exemple, quatre positions, une position route correspondant à la correction automatique, une position intermédiaire qui permet d'augmenter la garde au sol du véhicule, une position haute où le véhicule est en butée de détente, et enfin une position basse où la véhicule est en butée d'attaque.

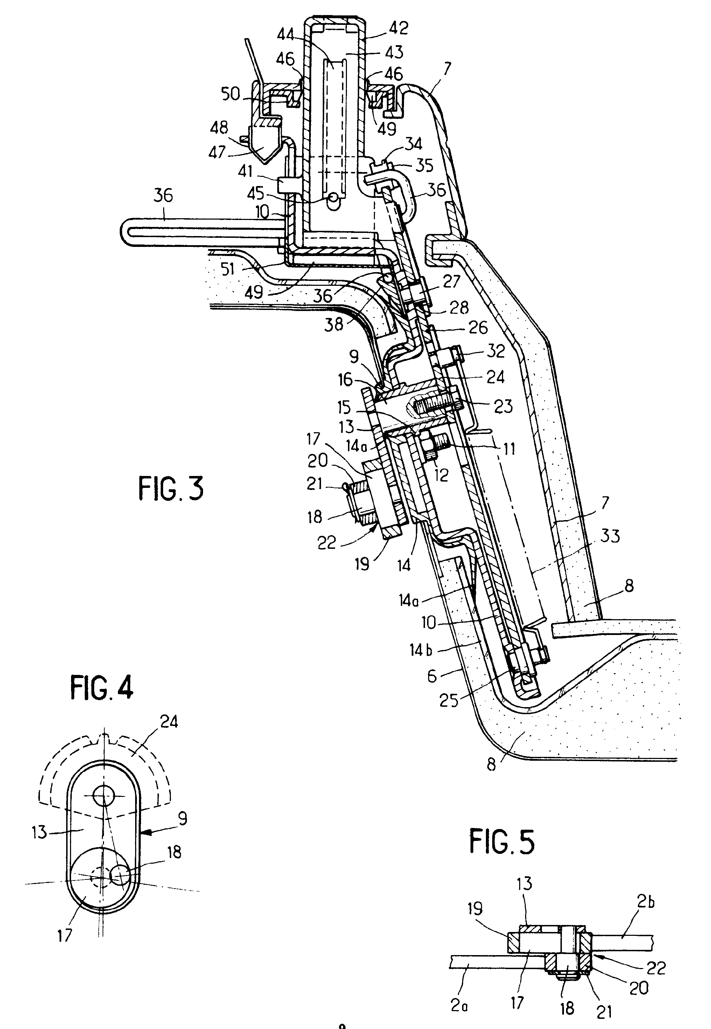

Le mécanisme de commande manuelle et d'assistance est adapté à être monté sur le flanc d'un tunnel central 6 (Fig. 3) qui, généralement, longe le plancher du véhicule et qui contient les conduits d'échappement non représentés. Ce tunnel 6 est souvent équipé au niveau du conducteur d'une console de commande 7. Le mécanisme de commande manuelle et d'assistabnce peut être logé à l'intérieur de l'habitacle du véhicule entre la console 7 et la paroi du tunnel 6, comme représenté sur la Fig. 3, les tringles 2a et 2b étant à l'extérieur de l'habitacle et à l'intérieur dudit tunnel 6. Le tunnel 6 et la console 7 sont revêtus d'un matériau insonorisant 8.

En se reportant aux Fig. 1 à 3, le mécanisme de commande manuelle de hauteur et d'assistance est constitué par une platine support 10 en tôle emboutie fixée contre le flanc du tunnel 6 par deux goujons 11 avec des écrous 12. Cette platine 10 est intercalée entre le tunnel 6 et la console 7.

Le tunnel 6 comporte un trou ovale 9 servant, lors du montage, au passage d'une manivelle 13 à l'extérieur dudit tunnel et un caoutchouc d'étanchéité 14 est interposé entre le tunnel 6 et la platine 10 pour assurer l'étanchéité au niveau du trou 9 et en même temps pour réaliser une liaison acoustique avec l'insonorisant 8. Un moyeu 15 est fixé, par exemple par sertissage ou soudage sur la platine 10 et à l'intérieur dudit moyeu est monté libre en rotation un axe 16 sur lequel est fixée, par exemple par sertissage ou soudage, la manivelle 13. L'étanchéité de cette arti culation est assurée par une lèvre 14a du caoutchouc 14.

Sur la manivelle 13, des doubles manetons excentrés 17 et 18 sont assemblés, par exemple par sertissage ou soudage, dont le décalage a pour but, compte tenu des angles que font entre elles les tringles longitudinales avant et arrière 2a et 2b, d'obtenir des débattements identiques vers l'avant et l'arrière.

L'articulation des tringles 2a et 2b sur les double manetons 17 et 18 est réalisée par l'intermédiaire de bagues soudées 19 et 20 maintenues par un clip 21 (Fig. 4 et 5). L'ensemble constitué par l'axe 16, la manivelle 13 et les manetons 17 et 18 comporte un revêtement fluoré pour améliorer le frottement et pour résister à la corrosion et à la chaleur. Pour ces mêmes raisons, une rondelle 22 également en matériau fluoré, est interposée entre les deux bagues 19 et 20.

En dehors de son point de fixation formé par les goujons 11, la platine 10 est écartée du flanc du tunnel 6 pour laisser la place au matériau insonorisant 8, et une lèvre 14b (Fig. 3) assure l'étanchéité acoustique avec ledit matériau insonorisant.

Sur l'axe 16, à l'extrémité opposée de la manivelle 13, est fixé par l'intermédiaire d'une vis 23, un petit secteur dentée 24.

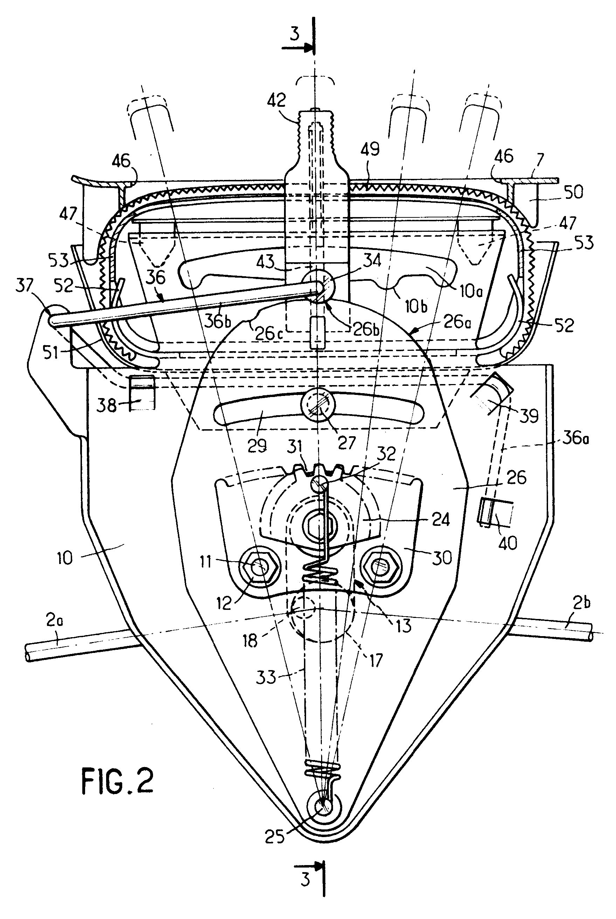

La platine 10 est munie à sa partie inférieure d'un axe 25 sur lequel est fixé, par exemple par rivetage, un grand secteur denté 26. D'autre part, la platine 10 comporte, au-dessus de l'axe 16, un axe 27 pour maintenir le grand secteur denté 26 contre ladite platine par l'intermédiaire d'une rondelle élastique ondulée 28. Au niveau de l'axe 27, le grand secteur denté 26 comporte une lumière de guidage 29 (Fig. 2) pour le passage de cet axe 27 et pour permettre à cet secteur denté 26 de basculer autour de l'axe 25.

De plus, le grand secteur denté 26 est muni au niveau du petit secteur denté 24 d'un évidement central 30 comportant une denture interne 31 qui coopère avec les dents prévues sur le petit secteur denté 24.

Le petit secteur 24 supporte un doigt 32 situé à l'opposé de l'axe 25 et un ressort d'assistance 33 est accroché entre le doigt 32 et l'axe 25. Ce ressort, en basculant de part et d'autre de la position d'équilibre, apporte l'asssitance désirée.

La partie supérieure du grand secteur denté 26 a la forme d'une came 26a dont les pentes sont descendantes de part et d'autre du point repos et comportent deux creux 26b, 26c au droit des positions d'arrêt. Le profil en forme de came 26a vise à équilibrer les efforts antagonistes.

Un galet 34 pivotant sur un coussinet 35 est appliqué sur la came 26a du grand secteur 26 par une tige ressort 36 en forme de U constituant en même temps un bras de guidage et agissant par flexion-torsion en prenant comme point de réaction un orifice 37 prévu dans la platine 10 d'une part, et sur trois crevés 38, 39 et 40 non alignés prévus dans ladite platine, d'autre part. La tenue en place de la tige ressort 36 est assurée par la précontrainte de ladite tige dans le fond des crevés. Les branches de la tige 36 sont disposées parallèlement aux axes de rotation 16 et 25 respectivement des petit et grand secteurs dentés 24 et 26, de manière à travailler en torsion. L'extrémité de la branche 36a est fixée dans les crevés 38, 39 et 40 et l'extrémité de la branche 36b prend appui sur un palier formé par l'orifice 37 et admet un prolongement perpendiculaire qui travaille à la flexion et qui porte le galet 34.

La partie supérieure de la platine 10 comporte une découpe en forme de grille 10a munie de crans 10b aux différents points d'arrêt qui coopère avec un ergot 41 prévu sur le côté d'un curseur 42 solidaire angulairement du grand secteur 26 par un levier 43 soudé ou serti sur ledit secteur. L'ergot 41 est maintenu dans le fond des crans 10b par un ressort 44 logé à l'intérieur du curseur 42 et prenant appui dans le fond dudit curseur sur une goupille élastique 45.

Pour décranter l'ergot 41, il suffit de soulever le curseur 42, la course vers le haut étant limitée par la partie supérieure de la découpe 10a de la platine 10. Le curseur 42 est positionné en hauteur par le niveau des crans 10b, de telle sorte que, quelle que soit sa position, son dépassement de la console est constant.

La console 7 comporte à cet effet, à sa partie supérieure, une ouverture 46 dans laquelle le curseur 42 se déplace et pour que ledit curseur soit parfaitement centré dans l'ouverture 46, cette dernière comporte deux doigts 47 permettant également de positionner correctement l'ensemble du mécanisme par rapport à la console 7 et des caoutchoucs 48 permettent d'éviter les vibrations.

L'ouverture 46 de la console 7 est obturée par un rideau souple 49 au travers duquel passe le curseur 42 et celui-ci par son mouvement déroule ledit rideau souple à l'intérieur des guides 50, 51, 52 et 53.

Le rapport des rayons primitifs des deux secteurs dentés 24 et 26 est tel que le débattement angulaire du petit secteur 24 soit un peu inférieur à 180°, de préférence égal à 150°, pour la course totale du curseur 42.

De plus, l'axe de rotation 25 du grand secteur denté 26, l'axe de rotation 16 commun du petit secteur denté 24 et de la manivelle 13, et l'axe du levier de manoeuvre 43 sont situés dans un plan vertical de symétrie du mécanisme de commande et d'assistance quand lesdites tringles 2a et 2b sont en position médiane.

La mise en oeuvre du dispositif qui vient d'être décrit est la suivante.

D'une manière générale, les tringles longitudinales 2a et 2b agissent sur les correcteurs de hauteur 3a et 3b par l'intermédiaire des ressorts 4a et 4b en passant par les biellettes de liaison 5a et 5b. Le mécanisme de commande manuelle et d'assistance décrit précédemment permet de bander les ressorts 4a et 4b.

En fonction de la position route, haute ou basse du véhicule que l'utilisateur désire obtenir, il déplace le curseur 42 dans un sens ou dans l'autre par rapport à la position médiane représentée à la Fig. 1, de telle manière que l'ergot 41 vienne se positionner dans l'un des crans 10b de la découpe 10a.

En sa déplaçant, le curseur 42 entraîne le levier 43, le grand secteur denté 26 guidé par l'axe 27 et qui pivote autour de l'axe 25. Le grand secteur denté 26 entraîne le petit secteur denté 24 qui pivote à son tour et entraîne en rotation l'axe 16 et la manivelle 13.

La manivelle 13 entraîne, par l'intermédiaire des manetons excentrés 17 et 18, les tringles longitudinales 2a et 2b qui agissent sur les correcteurs de hauteur 3a et 3b.

Le mouvement des manetons 17 et 18 agit donc directement sur les tringles longitudinales 2a et 2b qui se comportent comme des bielles en prenant réaction sur des paliers 54 et 55 situés vers leur autre extrémité.

Le ressort hélicoïdal 33 travaille à la traction et agit par l'intermédiaire du petit secteur 24 et l'axe 16, sur la manivelle 13 quand elle quitte sa position médiane.

De plus, le galet 34 mis en appui sur la came 26a du grand secteur 26 par la tige ressort 36 en forme de U, permet d'annuler le couple résultant sur la manivelle 13 pour toutes les positions du levier 43.

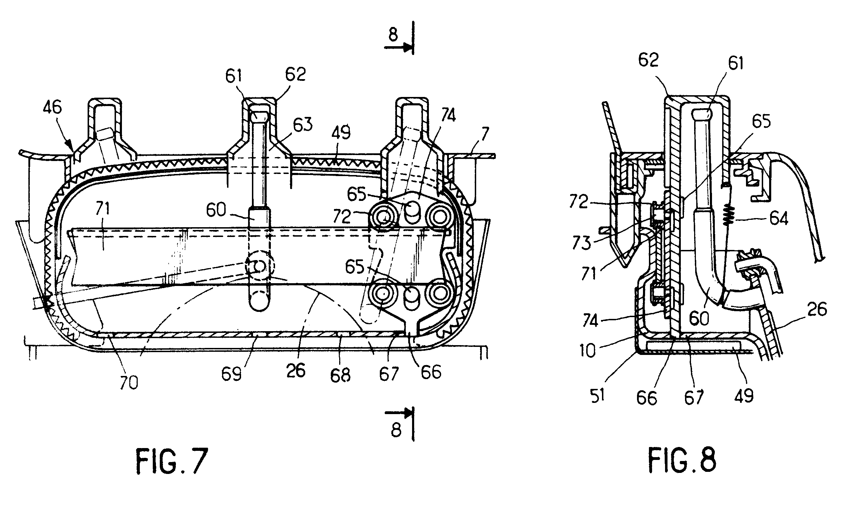

Selon une variante représentée aux Fig. 6 à 8, le curseur est dans ce cas à mouvement rectiligne et non à mouvement oscillant comme précédemment.

Pour cela, sur le grand secteur denté 26 est fixé, par exemple par sertissage ou soudage, un levier 60 qui comporte en sa partie supérieure une sphère 61 coiffée par un curseur 62 muni d'un cavité interne 63. Le curseur 62 est rappelé vers le bas par un ressort 64 (Fig. 8) et la cavité interne 63 est telle qu'elle puisse accepter tous les débattements aussi bien longitudinaux que latéraux du levier 60 et ceci sans jeu dans le sens de la course longitudinale, le curseur 62 restant dans ce cas toujours vertical.

Le curseur 62 est fixé sur un chariot 74 par deux axes 65 permettant le coulissement vertical dudit curseur sur le chariot, ceci afin de pouvoir décranter la partie inférieure du curseur 62 qui comporte un petit ergot 66 coopérant avec des trous de position 67, 68, 69 et 70 prévus à la partie supérieure de la platine 10.

Le chariot 74 circule longitudinalement sur un rail 71 solidaire de la platine 10, grâce à quatre galets 72 tournant sur quatre axes 73 solidaires dudit chariot, de telle manière que le dépassement du curseur 62 de la console est constant.

Comme dans le mode de réalisation précédent, le rideau souple 49 obture l'ouverture 46 de la console 7 et les autres éléments du mécanisme sont identiques.

Dans ces deux modes de réalisation, le dispositif d'asssitance permet d'obtenir une commande à faible effort et quasiment à effort constant, et peut bien évidemment être utilisé pour la commande d'un seul correcteur d'assiette.

## Revendications

1. Dipositif d'assistance pour une commande de correcteurs d'assiette de véhicules automobiles comportant un levier de manoeuvre (43, 60) agissant sur un ou deux correcteurs de hauteur (3a, 3b) par l'intermédiaire de moyens élastiques (4a, 4b) reliés par des tringles (2a, 2b) à une manivelle (13) qui admet une position médiane pour laquelle les moyens élastiques sont au repos, des moyens d'assistance mécanique (33) agissant sur la manivelle (13) quand elle quitte sa position médiane et des moyens d'entrainement de ladite manivelle (13) par le levier de manoeuvre (43, 60) composés d'un premier secteur denté (26) solidaire du levier engrénant avec un deuxième secteur denté (24) solidaire de la manivelle (13), caractérisé en ce qu'il comporte,en outre,des moyens complémentaires d'assistance mécaniques propres à annuler pour toutes les positions du levier de manoeuvre (43, 60) le couple résultant sur la manivelle (13) et comportant un galet (34) mis en appui par un organe élastique (36) sur une canne (26a) solidaire du premier secteur denté (26).

2. Dispositif selon'là'revendication 1, caractérisé en ce que le premier secteur (26) comporte une denture interne (31) et pivote sur un axe (25) disposé à l'opposé du levier de manoeuvre (43, 60) par rapport à ladite denture interne (31).

3. Dispositif selon les revendications 1 et 2, caractérisé en ce que l'axe de rotation (25) du premier secteur (26), l'axe de rotation (16) commun du deuxième secteur (24) et de la manivelle (13), et l'axe du levier de manoeuvre (43, 60) sont situés dans un plan de symétrie du dispositif quand les tringles (2a, 2b) sont en position médiane.

4. Dispositif selon l'une des revendications 1 à 3, caractérisé en ce que les moyens d'assistance mécanique se composent d'un ressort hélicoïdal (33) travaillant à la traction dont l'une des extrémités est fixée sur l'axe de rotation (25) du premier Orsecteur (26) et dont l'autre extrémité est fixée par un doigt (32) du deuxième secteur (24), situé en position médiane dans le plan de symétrie du dispositif.

5. Dispositif selon la revendication 1, caractérisé en ce que l'organe élastique se compose d'une tige (36) en forme de U dont les branches (36a, 36b) sont disposées parallèlement aux axes de rotation (16, 25) des secteurs (24, 26) de manière à travailler en torsion, l'extrémité de l'une (36a) des branches de la tige (36) étant fixe et l'extrémité de l'autre branche (36b), en appui sur un palier (37), admettant un prolongement perpendiculaire qui travaille à la Flexion et qui porte le galet (34).

6. Dispositif selon l'une des revendications précédentes, caractérisé en ce que le levier de manoeuvre (60) oscille à l'intérieur d'un curseur (62) muni de moyens pour rouler sur un rail (71) perpendiculaire au plan de symétrie du dispositif, des moyens élastiques (64) étant prévus pour engager un ergot (66) du curseur (64) dans un crantage (67, 68, 69, 70) prévu sur la platine (10).

7. Dispositif selon la revendication 6, caractérisé en ce que les moyens pour déplacer le curseur (62) sur le rail (71) sont constitués par un chariot (74) fixé sur ledit curseur par des axes (65) et comportant des galets (72) tournant sur des axes (73) solidaires dudit chariot.

## Patentansprüche

1. Servovorrichtung für eine Höhenregelung von Kraftfahrzeugen, mit einem Betätigungshebel (43, 60), der über elastische Mittel (4a, 4b), die durch Gestänge (2a,2b) mit einer Kurbel (13) verbunden sind, auf ein oder zwei Höhenkorrekturglieder (3a,3b) wirkt, wobei die Kurbel (13) eine Mittelstellung einnehmen kann, in der sich die elastischen Mittel in Ruhe befinden, mit mechanischen Servomitteln (33), die auf die Kurbel (13) wirken, wenn diese ihre Mittelstellung verläßt, und mit Mitteln zum Antrieb der Kurbel (13) durch den Betätigungshebel (43,60), die einen ersten starr an dem Hebel ausgebildeten Zahnsektor (26) in Eingriff mit einem zweiten, starr an der Kurbel (13) ausgebildeten Zahnsektor (24) aufweisen, dadurch gekennzeichnet, daß die Vorrichtung außerdem mechanische Ergänzungs-Servomittel aufweist, die dazu geeignet sind, für alle Stellungen des Betätigungshebels (43,60) das auf die Kurbel (13) wirkende resultierende Drehmoment zu beseitigen und die eine Rolle (34) aufweisen, die durch ein elastisches Element (36) gegen einen an dem ersten Zahnsektor (26) ausgebildeten Nocken (26a) angedrückt wird.

2. Vorrichtung nach Anspruch 1, dadurch gekennzeichnet, daß der erste Sektor (26) eine Innenzahnung (31) aufweist und auf einer Achse (25) schwenkbar ist, die dem Betätigungshebel (43,60) bezüglich der Innenzahnung (31) gegenüberliegt.

3. Vorrichtung nach den Ansprüchen 1 und 2, dadurch gekennzeichnet, daß die Drehachse (25) des ersten Sektors (26), die gemeinsame Drehachse (16) des zweiten Sektors (24) und der Kurbel (13) und die Achse des Betätigungshebels (43, 60) in einer Symmetrieebene der Vorrichtung liegen, wenn sich die Gestänge (2a,2b) in der Mittelstellung befinden.

4. Vorrichtung nach einem der Ansprüche 1 bis 3, dadurch gekennzeichnet, daß die mechanischen Servomittel gebildet werden durch eine ZugSchraubenfeder (33), deren eines Ende an der Drehachse (25) des ersten Sektors (26) befestigt ist, und deren anderes Ende an einem Zapfen (32) des zweiten Sektors (24) befestigt ist, welcher Zapfen sich in der Mittelstellung in der Symmetrieebene der Vorrichtung befindet.

5. Vorrichtung nach Anspruch 1, dadurch gekennzeichnet, daß das elastische Element eine U-förmige Stange (36) ist, deren Schenkel (36a,36b) parallel zu den Drehachsen (16,25) der Sektoren (24,26) angeordnet sind, so daß sie als Torsionsfedern wirken, und daß das Ende eines Schenkels (36a) der Stange (36) fixiert ist und das Ende des anderen Schenkels (36b), das sich an einem Lager (37) abstützt, eine rechtwinklige Verlängerung aufweist, die auf Biegung beansprucht wird und die Rolle (34) trägt.

6. Vorrichtung nach einem der vorstehenden Ansprüche, dadurch gekennzeichnet, daß der Betätigungshebel (60) in Inneren eines Läufers (62) oszilliert, der mit Mitteln zum Abrollen auf einer rechtwinklig zur Symmetrieebene der Vorrichtung verlaufenden Schiene (71) versehen ist, wobei elastische Mittel (64) vorgesehen sind, die einen Vorsprung (66) des Läufers (64) mit einer an der Grundplatte (10) vorgesehenen Rastung (67,68,69,70) in Eingriff halten.

7. Vorrichtung nach Anspruch 6, dadurch gekennzeichnet, daß die Mittel zum Bewegen des Läufers (62) auf der Schiene (71) gebildet werden durch einen Wagen (74), der durch Achsen (65) an dem Läufer befestigt ist und Rollen (72) aufweist, die auf den an dem Wagen ausgebildeten Achsen (73) drehbar sind.

**Claims**

1. Servo assistance device for the control of position regulators for motor vehicles, comprising an operating lever (43, 60) acting on one or two height regulators (3a, 3b) by elastic means (4a, 4b) connected by rods (2a, 2b) to a crank (13) which permits a central position in which the elastic means are at rest, with mechanical assistance means (33) acting on the crank (13) when it leaves its central position, and means for driving the said crank (13) by way of the operating lever (43, 60), which means comprise a first toothed sector (26) solidly connected to the lever and meshing with a second toothed sector (24) solidly connected to the crank (13), **characterised in that** the device further comprises additional mechanical assistance means suitable for cancelling, for all positions of the operating lever (43, 60), the torque produced on the crank (13), and comprising a roller (34) brought to bear by an elastic element (36) upon a rib (26a) solidly connected to the first toothed sector (26).

2. Device according to claim 1, characterised in that the first sector (26) comprises an inner toothing (31) and pivots on an axis (25) which is arranged opposite the operating lever (43, 60) relative to the said inner toothing (31).

3. Device according to claims 1 and 2, characterised in that the axis of rotation (25) of the first sector (26), the common axis of rotation (16) of the second sector (24) and the crank (13), and the axis of the operating lever (43, 60) are located in a plane of symmetry of the device when the rods (2a, 2b) are in a central position.

4. Device according to one of claims 1 to 3, characterised in that the mechanical assistance means comprise a helical spring (33) operating in traction, one end of which is attached to the axis of rotation (25) of the first sector (26), and the other end of which is attached by way of a pin (32) of the second sector (24), which pin is located in a central position in the plane of symmetry of the device.

5. Device according to claim 1, characterised in that the elastic element comprises a rod (36) in the shape of a U, the arms (36a, 36b) of which are arranged parallel to the axes of rotation (16, 25) of the sectors (24, 26) so as to operate in torsion, the end of one (36a) of the arms of the rod (36) being fixed and the end of the other arm (36b), supported on a bearing (37), permitting a perpendicular extension which operates in flexion and which carries the roller (34).

6. Device according to one of the preceding claims, characterised in that the operating lever (60) oscillates inside a slider (62) provided with means for running on a rail (71) perpendicular to the plane of symmetry of the device, elastic means (64) being provided for engaging a lug (66) of the slider (62) in a latching arrangement (67, 68, 69, 70) provided on the plate (10).

7. Device according to claim 6, characterised in that the means for displacing the slider (62) on the rail (71) are formed by a carriage (74) which is attached to the said slider by pins (65) and comprising rollers (72) rotating about spindles (73) which are solidly connected to the said carriage.

FIG.1

FIG.6

FIG.2

FIG. 3

FIG. 4

FIG. 5

9

FIG.7

FIG.8

EP 0 311 465 B1